Europäisches Patentamt

European Patent Office

Office européen des brevets

(11) Veröffentlichungsnummer: **0 129 212**
**B1**

# EUROPÄISCHE PATENTSCHRIFT

(45) Veröffentlichungstag der Patentschrift:
30.03.88

(51) Int. Cl.⁴: **B 62 K 17/00, B 62 B 15/00**

(21) Anmeldenummer: 84106799.4

(22) Anmeldetag: 14.06.84

(54) **Segelantrieb für ein Fahrrad.**

(30) Priorität: 20.06.83  DE 3322498

(43) Veröffentlichungstag der Anmeldung:
27.12.84 Patentblatt 84/52

(45) Bekanntmachung des Hinweises auf die Patenterteilung:
30.03.88 Patentblatt 88/13

(84) Benannte Vertragsstaaten:
AT BE CH DE FR GB IT LI LU NL SE

(56) Entgegenhaltungen:
FR - A - 325 855
US - A - 3 986 722

(73) Patentinhaber: Kindermann, Peter, Durch die Aue 1c,
D-4330 Mülheim (DE)

(72) Erfinder: Kindermann, Peter, Durch die Aue 1c,
D-4330 Mülheim (DE)

(74) Vertreter: Schulte, Jörg, Dipl.-Ing., Hauptstrasse 2,
D-4300 Essen-Kettwig (DE)

## Beschreibung

Die Erfindung betrifft einen Segelantrieb für ein Fahrrad, bei welchem das Segel über ein am Fahrradrahmen vorgesehenes Gestänge mittels eines oberhalb von Lenker und Sattel liegenden Befestigungspunktes lösbar am Fahrrad befestigt ist, wobei das Segel im Vorliek eine Versteifung in Form einer Vorliekstange aufweist und die Vorliekstange ihrerseits einen von ihr zu den hinteren Segelkanten hin verlaufenden Segelbaum trägt.

Derartige Segelantriebe sind erdacht worden, um den Benutzern von Fahrrädern die für den Antrieb des Fahrrades notwendige Kraftanstrengung zumindest teilweise abzunehmen. Bereits 1893 ist durch das DE-C-75 773 ein Fahrradantrieb geschützt worden, bei dem versucht worden ist, die Windenergie auszunutzen. Bei diesem Windrad war aber ebenso wie bei späteren Segelantrieben keine Lösung gefunden worden, die es dem Fahrradbenutzer ermöglicht, auch bei Seitenwind mit Segel zu fahren. Bei der aus der US-C-3 572 740 bekannten Konstruktion handelt es sich um eine Dreiradkonstruktion mit entsprechend weitem Radstand. Abgesehen davon, dass hier der Schwerpunkt wesentlich niedriger zum Erdboden liegt und Gleichgewichtsprobleme nicht bestehen, ist eine Übertragung dieses Segels auf ein Fahrrad schon wegen der notwendigen Abspannungen nicht möglich. Zwar ist hier eine Art kardanische Lagerung vorgesehen und auch ein Seilzug am Ende des Segelbaums, um so die Manövrierbarkeit des Segels zu erleichtern. Allerdings ist dieses Segel wegen der Abmessungen und wegen des hoch über dem Fahrzeug liegenden Segeldruckpunktes für zweirädrige Fahrzeuge nicht einzusetzen. Auch ist der Seilzug am Ende des Segelbaumes mit dem Gerät verbunden und kann vom Fahrer ohne weitere Umlenkung gehandhabt werden, weil er am hinteren Ende des Fahrzeugs sitzt.

Die US-C-3 836 176 betrifft ein Fahrrad mit einer Segeleinrichtung, bei der der Segeldruckpunkt vor dem Lenker liegt, was zu einer sehr ungünstigen Belastung führt. Darüberhinaus kann so der Wind zum Segelbetrieb je nach Einfall nur begrenzt ausgenutzt werden. Die Segelfläche ist in ihrer Grösse wegen der Anordnung vor dem Lenker stark eingegrenzt, weil ansonsten die Sicht des Fahrers zu stark eingeschränkt würde. Die Segelkonstruktion ist darüberhinaus veraltet und Vortriebskräfte können nur ausgenutzt werden, wenn der Wind rechtwinklig einfällt. Das Segel muss darüberhinaus von Hand verschwenkt und in dem jeweiligen Winkel gehalten werden, was die Fahrtüchtigkeit wesentlich einschränkt.

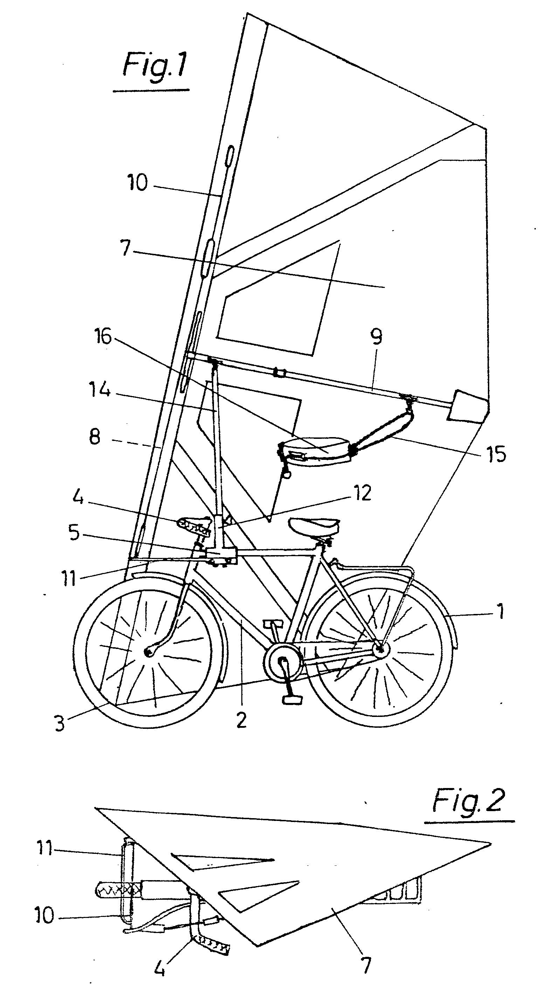

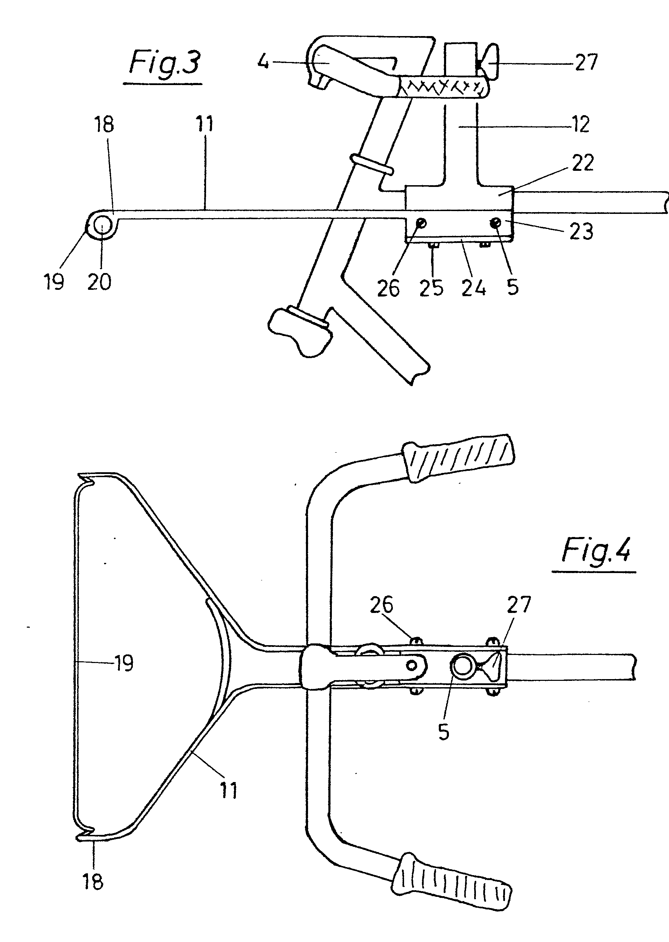

Bei der US-C-3 986 722, die dem Oberbegriff entspricht, handelt es sich um einen Segelantrieb für eine spezielle Zweiradkonstruktion, was insbesondere die Fig. 1 und 3 verdeutlichen. Diese Zweiradkonstruktion, die nicht als übliches Fahrrad gleichzeitig mit eingesetzt werden kann, verfügt über eine Art Hochsegel, wie es bei Jachten und Jollen verwendet wird. Da die Windangriffsfläche und das Kompensationsgewicht untereinander liegen, ergibt sich hier ein instabiles Fahrverhalten. Diese Nachteile versucht die US-PS durch besondere Sitzanordnung, Sitzkonstruktion, Speziallenker u.ä. auszugleichen. Mit einem üblichen Fahrrad ist ein solches Segel nicht zu kombinieren, wobei hinzu kommt, dass die Bedienung des Segels den Fahrer notwendigerweise dazu zwingt, das Fahrzeug lediglich mit einer Hand zu lenken.

Der Erfindung liegt die Aufgabe zugrunde, einen sicher zu betreibenden, eine ausreichend grosse Segelfläche aufweisenden und mit einem üblichen Fahrrad als Zusatz zu kombinierenden Segelantrieb zu schaffen.

Die Aufgabe wird erfindungsgemäss dadurch gelöst, dass das Segel symmetrisch ausgebildet ist und der Segelbaum die Symmetrieachse bildet, dass die Vorliekstange in ihrer Längsmitte kardanisch an dem am Fahrradrahmen vorgesehenen Gestänge gelagert ist, dass ein die Enden der Vorliekstange verbindendes Seil an dem am Fahrradrahmen vorgesehenen Gestänge im Bereich zwischen Vorderrad und Lenker festlegbar geführt ist und dass ein mit dem freien Ende des Segelbaumes verbundener Seilzug mit dem Körper des Fahrers verbunden ist.

Ein derartiger Segelantrieb kann mit jedem Fahrrad verbunden und mit diesem gemeinsam betrieben werden. Durch die besondere Ausbildung des Segels liegt der Segeldruckpunkt in einem so günstigen Verhältnis zum Fahrersitz, dass dieses leicht hantiert und so in den Wind gestellt werden kann, dass der Wind auch voll ausgenutzt wird. Erst bei der symmetrischen Ausbildung des Segels wirkt sich die kardanische Anlenkung in der beschriebenen Art und Weise vorteilhaft aus. Da das Segel mit seinem unteren Ende durch das Seil geführt ist und das hintere Ende des Segelbaums über den Seilzug leicht dirigiert werden kann, ist eine leichte Handhabung des Segelantriebes auch für Anfänger möglich. Mit dem erfindungsgemässen Segel können Winde unterschiedlicher Richtung ausgenutzt werden, so dass mit dem Segelantrieb eine wirkliche Unterstützung bzw. letztlich sogar ein Ersatz der Muskelkraft zu erreichen ist.

Nach einer zweckmässigen Ausbildung der Erfindung ist vorgesehen, dass das Gestänge eine gabelartig ausgebildete Stange, die über den Lenker vorsteht, und eine senkrecht angeordnete rohrförmige Stange, in die der Segelmast einführbar ist, aufweist. Ein solches Gestänge kann ohne den Betrieb des Fahrrades ohne Segel zu behindern angebracht und angebracht belassen werden. Vorteilhafterweise kann die gabelartig ausgebildete Stange sogar zum Ablegen des Segels mitbenutzt werden. Nach der Montage, wobei der Segelmast lediglich in die rohrförmige Stange eingeführt und festgelegt wird, dient die gabelartig ausgebildete Stange als Führung für das die Enden der Vorliekstange verbindende Seil. Eine zweckmässige Festlegung des Seils bzw. der hierfür vorgesehenen Teile im Bereich der gabelartig ausgebildeten Stange wird erleichtert, indem die Zinkenenden der gabelartig ausgebildeten Stange über ein Federelement verbunden sind.

Um die einzelnen Teile in leicht transportierbare Grössen aufteilen zu können, ist erfindungsgemäss vorgesehen, dass der Segelbaum und die zweistückige Vorliekstange über ein T-Rohrstück zusammengesteckt sind, wobei der in die senkrechte Stange eingeführte Segelmast im Bereich des T-Rohrstückes kardanisch gelagert ist. Die Vorliekstangenteilstücke, der Segelbaum und der Segelmast bilden etwa gleich lange Teile, so dass das Segel sehr leicht zerlegt und gut transportiert werden kann. Der Segelmast ist dabei im T-Rohrstück über eine Stellschraube festlegbar, während die zweistückige Vorliekstange über die Vorliektasche im T-Rohrstück festgelegt ist. Dies erleichtert die Montage und Demontage, da letztlich nur die Stellschraube gelöst werden muss, um dann die einzelnen Teile auseinanderzunehmen bzw. sie zu montieren. Eine zweckmässige Verbesserung der kardanischen Lagerung wird dadurch erreicht, dass der Segelmast über einen Powerjoint mit dem T-Rohrstück verbunden ist. Durch die Verbindung am T-Rohrstück ist die kardanische Lagerung in einen Bereich gelegt, wo sie den Betrieb des Segels wesentlich erleichtert.

Das Festlegen des die Enden der Vorliekstange verbindenden Seils bzw. dessen Lösen bei Bedarf wird dadurch erleichtert, dass es durch Bohrungen in den freien Enden der gabelartig ausgebildeten Stange geführt und zwischen rohrförmig ausgebildeten Versteifungen als Gummiseil ausgebildet ist. Schon durch leichtes Ziehen des Gummiseils können die Versteifungen im Bereich der Bohrungen festgelegt oder gelockert werden.

Zur Montageerleichterung ist weiter vorgesehen, dass die rohrförmige Stange des Gestänges am dem Segelmast gegenüberliegenden Ende ein rechtwinklig angesetztes U-förmiges Profilblech aufweist, dessen Flanken mit einem Gewindestück zu verbinden sind, in dem gegen den Fahrradrahmen verdrehbare Spannschrauben gehalten sind. Das U-förmige Profilblech wird hier einfach auf den Rahmen aufgeschoben und dann durch Anbringen des Gewindestückes angeschlagen. Durch Betätigen der Spannschrauben erfolgt dann eine so exakte Festlegung und dauernde Festlegung, dass der Betrieb des Segelantriebes nicht durch Verrutschen dieser Halterung gefährdet ist.

Um den Segelbaum leicht zu dirigieren bzw. jeweils in der richtigen Position zu halten, ist vorgesehen, dass der Segelbaum und Fahrer verbindende Seilzug, der endseitig über einen Karabinerhaken mit dem Segelbaum und andererseits mit dem Gürtel des Fahrers verbunden bzw. verknotet ist, zusätzlich am Gürtel über eine Belegklemme festlegbar ist. Dabei ist die Belegklemme auf der Vorderseite des Gürtels in Schnallennähe angeordnet und der Seilzug trägt am freien Ende eine Kugel. So ist sichergestellt, dass sich das Ende des Seilzuges immer in Griffnähe des Fahrers befindet.

Die Erfindung zeichnet sich insbesondere dadurch aus, dass ein Segelantrieb für übliche Fahrräder geschaffen ist, der leicht montiert und demontiert werden kann. Dabei ist es möglich, das gesamte Segel mit wenigen Handgriffen auseinanderzunehmen und transportfähig zu machen bzw. es so aufzurüsten, dass das Fahrrad anschliessend mit dem Segelantrieb sicher betrieben werden kann. Der Segelandruckpunkt liegt so günstig, dass praktisch alle Winde zum Betrieb ausgenutzt werden können, wobei auch bei der Grösse des Segels ein einwandfreier Betrieb deshalb möglich ist, weil das Segel seitwärts des Fahrrades geführt ist.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:

Fig. 1 ein Fahrrad mit Segelantrieb in Seitenansicht,

Fig. 2 ein Fahrrad mit Segelantrieb in Draufsicht,

Fig. 3 die Verbindungsteile mit dem Fahrradrahmen in Seitenansicht,

Fig. 4 die Verbindungsteile und Führungsteile für das Seil in Draufsicht,

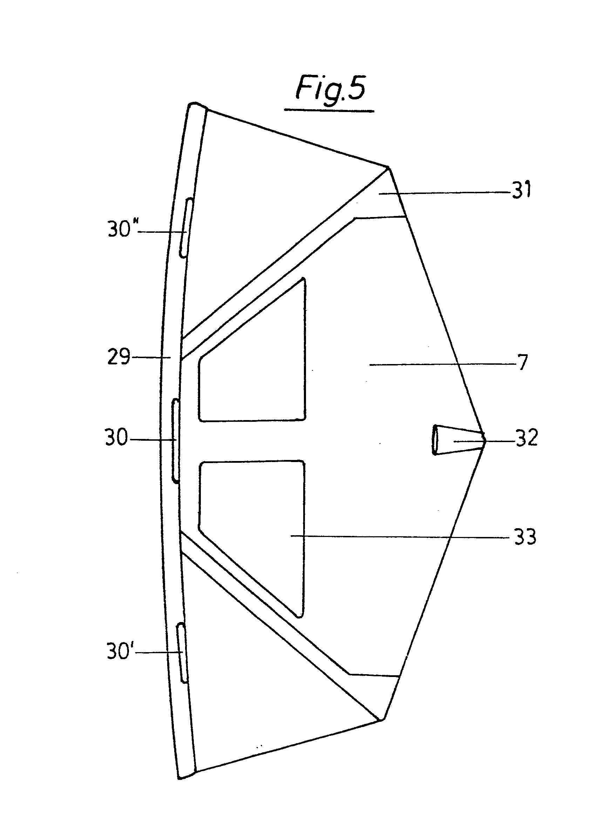

Fig. 5 das Segel in Seitenansicht,

Fig. 6 das Gerüst des Segels in Seitenansicht,

Fig. 7 die Seilführung am Vorliek des Segels,

Fig. 8 das Seil in Einzeldarstellung und

Fig. 9 die Anordnung des Seilzuges am Ende des Segelbaumes in perspektivischer Darstellung.

Bei dem in Fig. 1 gezeigten Fahrrad 1 handelt es sich um ein für den üblichen Strassenverkehr zugelassenes Fahrzeug. Der Fahrradrahmen 2 trägt das Vorderrad 3 und das Hinterrad, wobei das Vorderrad 3 über den Lenker 4 dirigiert werden kann. Am Fahrradrahmen 2 angeschlagen ist das Gestänge 5 zur Befestigung des Segelantriebes.

Die Konstruktion des Segels 7 ist symmetrisch gewählt. Das Vorliek ist als Tasche ausgebildet und nimmt die Vorliekstange 8 auf. Gestrafft wird das Segel durch den Segelbaum 9, der zwischen der entsprechenden Aussparung in der Vorliektasche und der Schottasche eingeschoben ist. Das die Enden der Vorliekstange 8 verbindende Seil 10 ist über die gabelartige Stange 11 des Gestänges 5 geführt, während der Segelmast 14 in die rohrförmige Stange 12 des Gestänges 5 eingesteckt und dort festgelegt ist.

Der Seilzug 15 am hinteren Ende des Segelbaums 9 verbindet diesen mit dem Gürtel 16 des hier nicht dargestellten Fahrers.

Fig. 2 zeigt eine Draufsicht auf ein Fahrrad 1 mit Segel 7, wobei im vorderen Bereich die Führung des Seils 10 durch die gabelartige Stange 11 angedeutet ist.

Die Fig. 3 und 4 verdeutlichen die Anbringung des Gestänges 5 am Fahrradrahmen 2. Dabei steht die gabelartige Stange 11 über den Lenker 4 vor, wobei die Zinkenenden 18 in Verbindung mit dem Federelement 19 eine Bohrung 20 bilden, durch die das hier nicht dargestellte Seil 10 hindurchgeführt wird. Die Bohrung dient dabei dazu, das Belegen des Segels schnell und kurzfristig zu lösen bzw. herzustellen.

Die gabelartige Stange 11 ist zusammen mit der rohrförmigen Stange 12 am Fahrradrahmen befestigt. Hierzu weist die rohrförmige Stange 12 ein U-förmiges Profilblech 22 auf, das mit seinen Flanken 23 über den Rahmen geschoben und dann durch das Gewindestück 24 festgelegt wird. Über die Spannschrauben 25, die gegen den Fahrradrahmen 2 verdrehbar und verspannbar sind, erfolgt dann die genaue Fixierung und Festlegung der rohrförmigen Stange 12 am Fahrradrahmen 2. In der Regel sind vier Spannschrauben vorgesehen, um eine gleichmässige Verspannung und Festlegung zu erreichen. Mit 26 sind die Halteschrauben bezeichnet, über die die gabelartige Stange 11 am U-Profilblech 22 befestigt wird. Hier reicht es in der Regel, wenn zwei derartige Halteschrauben 26 auf beiden Seiten oder aber durchgehend vorgesehen sind. Mit 27 ist die Feststellschraube bezeichnet, über die der Segelmast 14 in der rohrförmigen Stange 12 festgelegt werden kann.

Das Segel 7 ist wie bereits erläutert symmetrisch ausgebildet, wobei die Symmetrieachse von dem hier nicht dargestellten Segelbaum 9 gebildet ist. Zur Aufnahme der Vorliekstange 8 ist das Segel 8 von der Vorliektasche 29 begrenzt. Diese Vorliektasche 29 ist mit Aussparungen 30, 30', 30'' versehen, um wie noch weiter hinter erläutert ist. Ösen an der Vorliekstange 8 zugänglich zu machen. Diese Ösen werden für das Seil benötigt, das wiederum zur vertikalen Fixierung des Segels benötigt wird. Zur Segelvergrösserung sind die Achterlieken ausgestellt und zur Straffung mit Lattentaschen für Segellatten 31 ausgerüstet. Ausserdem ist eine Schottasche 32 zur Aufnahme des Segelbaums 9 ausgebildet. Da bei Segelbetrieb die Sicht des Fahrers zu einer Seite hin durch das Segel behindert, sind Sichtfenster 33 im Segel vorgesehen.

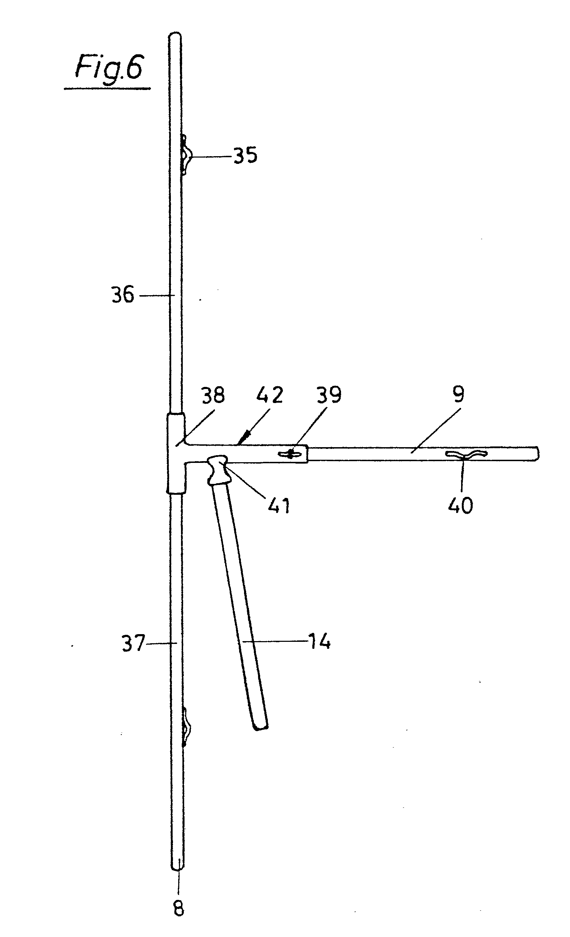

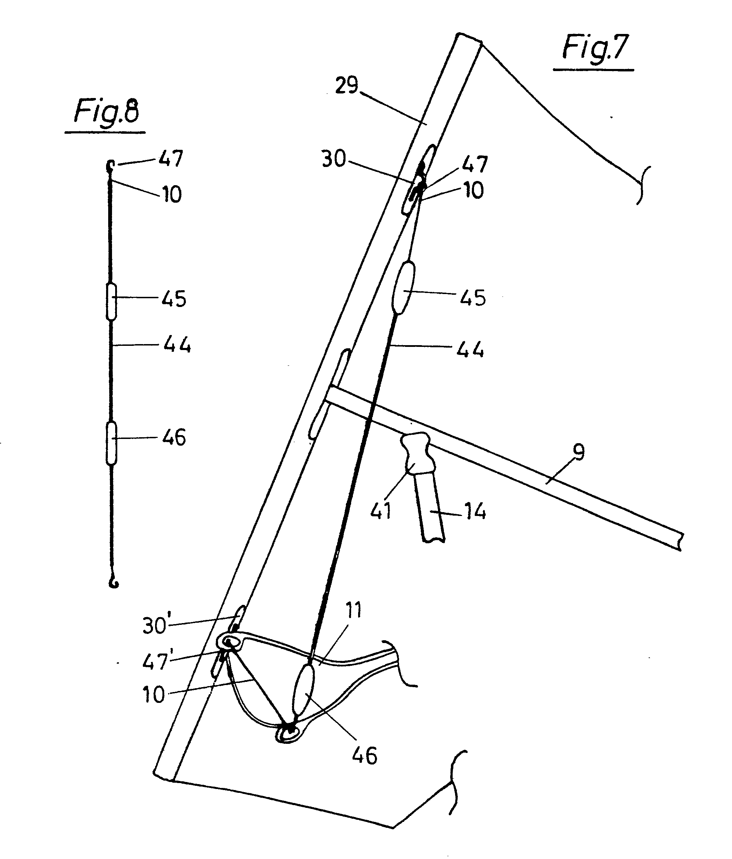

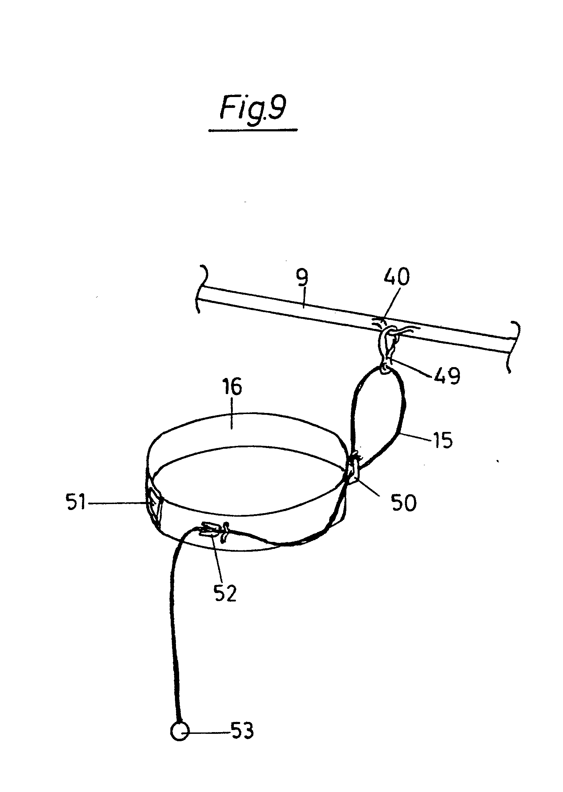

Als Niederhalter für linken und rechten Anschlag des Segels 7 dient die Gabelkonstruktion der Stange 11, die beispielsweise aus gebogenem Draht besteht. Der Niederhalter hat die Aufgabe, das Segel für den Segelbetrieb vertikal zu fixieren. Hierbei kommt es darauf an, dass der vertikale Stand des Segels 7 fest ist und sich nicht zufällig löst. Ebenso ist es aber auch wichtig, dass mit einem einfachen Handgriff die Verbindung gelöst werden kann, um das Segel nach einer Wende auf der Gegenseite in gleicher Weise zu arretieren. Die Fig. 7 und 8 zeigen den Aufbau des Niederhalters. Das Seil 10 ist über Karabinerhaken 47 in die Ösen 35 eingeführt. Bis zu den Versteifungen 45, 46 handelt es sich um ein übliches Seil, während der mittlere Bereich als Gummiseil 44 ausgebildet ist. Bei den Versteifungen handelt es sich beispielsweise um Rohrstücke von ca. 10 cm Länge. Das Seil wird mit dem Karabinerhaken 47 wie beschrieben in die Öse 35 eingeklinkt, durch die Bohrungen 20 geführt und mit dem zweiten Karabinerhaken in die zweite untere Öse der Vorliekstange eingeklinkt. Auf diese Weise kann die vertikale Festlegung des Segels leicht eingestellt und gelöst werden. In Fig. 6 ist das Segelgestänge wiedergegeben und verdeutlicht, wie mit Hilfe des T-Rohrstückes 38 das Segelgestänge in Grössen zerlegt werden kann, die leicht zu transportieren sind. Im T-Stück stossen sowohl die Teilstücke 36, 37 der Vorliekstange 8 als auch der Segelbaum 9 zusammen. Durch entsprechende Vorfestlegung in der Vorliektasche bzw. der Schottasche erfolgt deren Festlegung im T-Rohrstück, wobei mit Hilfe der Stellschraube 39 die Wirkungslänge des Segelbaums 9 eingestellt werden kann. Am oberen und unteren Ende der Vorliekstange sind Ösen 35 zum Anschlag der Karabinerhaken 47 vorgesehen. Der Segelbaum trägt einen Schotring 40, um den Seilzug 15 mit ihm verbinden zu können. Der Befestigungspunkt 42 des gesamten Segels bzw. des Segelmastes 14 am übrigen Segelgestänge ist so gewählt, dass bei geb[läh]tem Segel ca. $1/3$ des Segeldruckes zwischen Vorliekstange und Kardangelenkt liegt. Das Kardangelenk ist hier als Powerjoint 41 ausgebildet, um eine leichte und sichere Verbindung mit dem T-Rohrstücke 38 bzw. den übrigen Teilen zu erreichen. Bei dem Powerjoint handelt es sich um einen Gummipfropfen, in den endseitig je Gewindestifte einvulkanisiert sind, die zur Verbindung mit dem Segelmast 14 bzw. dem T-Rohrstück 38 dienen. Zwei Drittel des Segeldruckes entsteht zwischen Powerjoint und Schottasche 32, so dass die Segelführung erleichtert ist, da die aufzuwendende Kraft am Schotring 40 nur gering ist. Der Seilzug 15 wird am Körper des Fahrers geführt und am Schotring 40 mit Hilfe des Karabinerhakens 49 eingeklinkt. Vorgesehen ist ein Gürtel 16 mit Schnalle 51, einem Ring 50 auf der Rückseite des Gürtels, sowie einer Belegklemme 52 auf der Vorderseite des Gürtels nahe der Schnalle. Der Seilzug 15 ist mit seinem Ende am Ring 50 verknotet. Er wird durch den Karabinerhaken 49 und wieder durch den Ring 50 geführt, um so ein Festlegen in der Belegklemme 52 zu ermöglichen. Eine Bohrung in der Belegklemme 52, durch die der Seilzug 15 geführt wird, bewirkt zusammen mit der Kugel 53 am Ende des Seilzuges 15, dass sich dieser immer in Griffnähe des Fahrers befindet. Gürtel 16 und Seilzug 15 sind in Fig. 9 entsprechend dargestellt.

**Patentansprüche**

1. Segelantrieb für ein Fahrrad, bei welchem das Segel über ein am Fahrradrahmen vorgesehenes Gestänge mittels eines oberhalb von Lenker und Sattel liegenden Befestigungspunktes lösbar am Fahrrad befestigt ist, wobei das Segel im Vorliek eine Versteifung in Form einer Vorliekstange aufweist und die Vorliekstange ihrerseits einen von ihr zu den hinteren Segelkanten hin verlaufenden Segelbaum trägt, dadurch gekennzeichnet, dass das Segel (7) symmetrisch ausgebildet ist und der Segelbaum (9) die Symmetrieachse bildet, dass die Vorliekstange (8) in ihrer Längsmitte kardanisch an dem am Fahrradrahmen (2) vorgesehenen Gestänge (5) gelagert ist, dass ein die Enden der Vorliekstange verbindendes Seil (10) an dem am Fahrradrahmen vorgesehenen Gestänge im Bereich zwischen Vorderrad (3) und Lenker (4) festlegbar geführt ist und dass ein mit dem freien Ende des Segelbaumes (9) verbundener Seilzug (15) mit dem Körper des Fahrers verbunden ist.

2. Segelantrieb nach Anspruch 1, dadurch gekennzeichnet, dass das Gestänge (5) eine gabelartig ausgebildete Stange (11), die über den Lenker (4) vorsteht und eine senkrecht angeordnete rohrförmige Stange (12), in die der Segelmast (14) einführbar ist, aufweist.

3. Segelantrieb nach Anspruch 2, dadurch gekennzeichnet, dass die Zinkenenden (18) der gabelartig ausgebildeten Stange (11) über ein Federelement (19) verbunden sind.

4. Segelantrieb nach Anspruch 1 und Anspruch 2, dadurch gekennzeichnet, dass der Segelbaum (9) und die zweistückige Vorliekstange (8) über ein T-Rohrstück (38) zusammengesteckt sind, wobei der in die senkrechte Stange (12) eingeführte Segelmast (14) im Bereich des T-Rohrstückes kardanisch gelagert ist.

5. Segelantrieb nach Anspruch 4, dadurch gekennzeichnet, dass der Segelmast (14) im T-Rohrstück (38) über eine Stellschraube (39) festlegbar ist, während die zweistückige Vorliekstange (8) über die Vorliektasche (29) im T-Rohrstück festgelegt ist.

6. Segelantrieb nach Anspruch 1 und Anspruch 4, dadurch gekennzeichnet, dass der Segelmast (14) über einen Powerjoint (41) mit dem T-Rohrstück (38) verbunden ist.

7. Segelantrieb nach Anspruch 1 und Anspruch 2, dadurch gekennzeichnet, dass das die Enden der Vorliekstange (8) verbindende Seil (10) durch Bohrungen (20) in den freien Enden der gabelartig ausgebildeten Stange (11) geführt und zwischen rohrförmig ausgebildeten Versteifungen (45, 46) als Gummiseil (44) ausgebildet ist.

8. Segelantrieb nach Anspruch 1 und Anspruch 2, dadurch gekennzeichnet, dass die rohrförmige Stange (12) des Gestänges (5) am dem Segelmast (14) gegenüberliegenden Ende ein rechtwinklig angesetztes U-förmiges Profilblech (22) aufweist, dessen Flanken (23) mit einem Gewindestück (24) zu verbinden sind, in dem gegen den Fahrradrahmen (2) verdrehbare Spannschrauben (25) gehalten sind.

9. Segelantrieb nach Anspruch 1, dadurch gekennzeichnet, dass der Segelbaum (9) und Fahrer verbindende Seilzug (15), der endseitig über einen Karabinerhaken (49) mit dem Segelbaum und andererseits mit dem Gürtel (16) des Fahrers verknotet ist, zusätzlich am Gürtel über eine Belegklemme (52) festlegbar ist.

10. Segelantrieb nach Anspruch 1 und Anspruch 9, dadurch gekennzeichnet, dass die Belegklemme (52) auf der Vorderseite des Gürtels (16) in Schnallennähe angeordnet ist und der Seilzug (15) am freien Ende eine Kugel (53) trägt.

**Claims**

1. Sail drive for a bicycle, in which the sail is releasably attached to the bicycle via a rod assembly provided on the bicycle frame by means of a fixing point situated above handlebars and saddle, wherein the sail possesses, in the luff, a stiffening in the form of a luff rod and the luff rod for its part carries a boom extending from it to the rear edges of the sail, characterized in that the sail (7) is symmetrically formed and that the boom (9) forms the axis of symmetry, that the luff rod (8) is mounted at its longitudinal centre on gimbals on the rod assembly (5) provided on the bicycle frame (2), that a rope (10) connecting together the ends of the luff rod is guided on the rod assembly provided on the bicycle frame in a manner permitting securing in the region between the front wheel (3) and handlebars (4) and that a tackle (15), connected with the free end of the boom (9), is connected with the body of the rider.

2. Sail drive according to Claim 1, characterized in that the rod assembly (5) possesses a fork-shaped rod (11), which projects beyond the handlebars (4), and a vertically mounted tubular rod (12), into which the mast (14) can be introduced.

3. Sail drive according to Claim 2, characterized in that the prong ends (18) of the fork-shaped rod (11) are connected together by a spring element (19).

4. Sail drive according to Claim 1 and Claim 2, characterized in that the boom (9) and the two-part luff rod (8) are assembled by a pipe T-piece (38), the mast (14) introduced into the vertical rod (12) being attached by a gimbal connection in the region of the T-piece.

5. Sail drive according to Claim 4, characterized in that the mast (14) can be secured in the pipe T-piece (38) by an adjusting screw (39), whereas the two-part luff rod (8) is secured in the pipe T-piece by the luff pocket (29).

6. Sail drive according to Claim 1 and Claim 4, characterized in that the mast (14) is connected with the pipe T-piece (38) by a Powerjoint (41).

7. Sail drive according to Claim 1 and Claim 2, characterized in that the rope (10) connecting together the ends of the luff rod (8) is guided through bores (20) in the free ends of the fork-shaped rod (11) and is formed, between tubular stiffenings (45, 46), as a rubber rope (44).

8. Sail drive according to Claim 1 and Claim 2, characterized in that the butular rod (12) of the rod assembly (5) possesses, at the end remote from the mast (14), a U-section profile sheet (22) fitted on at right angles, the flanks (23) of which are to be connected together by a threaded piece (24), in which clamping screws (25) which can be tightened onto the bicycle frame (2) are held.

9. Sail drive according to Claim 1, characterized in that the tackle (15) connecting together the boom (9) and rider, which is connected at one end by a safety hook (49) with the boom and is tied at the other end to the belt (16) of the rider, can additionally be secured to the belt by a belaying clamp (52).

10. Sail drive according to Claim 1 and Claim 9, characterized in that the belaying clamp (52) is disposed on the forward side of the belt (16) in the vicinity of the buckle and that the tackle (15) carries a ball (53) at its free end.

## Revendications

1. Equipement propulseur à voile pour bicyclette, dont la voile est fixée amoviblement à cette bicyclette en un point situé au-dessus du guidon et de la selle, par l'intermédiaire d'une tringlerie montée sur le cadre, cette voile comportant dans le passant (ralingue) un renfort en forme de barre; laquelle porte un bout-dehors qui en part et va jusqu'aux bords postérieurs de la voile, caractérisé en ce que la voile (7) a une configuration symétrique et le bout-dehors (9) forme l'axe de symétrie, en ce que la barre (8) est articulée à la cardan au milieu de sa longueur sur la tringlerie (5) du cadre (2), en ce qu'un câble (10) qui relie les extrémités de cette barre va à cette tringlerie et peut y être fixé entre la roue avant (3) et le guidon (4) et en ce qu'un tirant de manœuvre (15) fixé à l'extrémité libre du bout-dehors (9) est fixé au corps du cycliste.

2. Equipement à voile selon la revendication 1, caractérisé en ce que la tringlerie (5) comporte une tige fourchue (11) qui dépasse le guidon (4) et une tige creuse (12) disposée verticalement, dans laquelle le mât (14) de la voile peut être inséré.

3. Equipement à voile selon la revendication 2, caractérisé en ce que les extrémités des dents (18) de la tige fourchue (11) sont reliées par l'intermédiaire d'un élément élastique (19).

4. Equipement à voile selon la revendication 1 et la revendication 2, caractérisé en ce que le bout-dehors (9) et la barre (8) en deux parties sont raccordés par un T tubulaire (38), le mât (14) de la voile inséré dans la tige verticale (12) étant articulé à la cardan près de ce T.

5. Equipement à voile selon la revendication 4, caractérisé en ce que le mât (14) de la voile peut être immobilisé dans le T (38) au moyen d'une vis d'arrêt (39), tandis que la barre (8) en deux parties est fixée dans ce T par l'intermédiaire du creux (29) du passant de la ralingue.

6. Equipement à voile selon la revendication 1 et la revendication 4, caractérisé en ce que le mât (14) de la voile est relié au T (38) par un joint Power (41).

7. Equipement à voile selon la revendication 1 et la revendication 2, caractérisé en ce que le câble (10) qui relie les extrémités de la barre (8) passe dans des trous (20) des extrémités libres de la tige fourchue (11) et est constitué par un câble élastique (44) entre des renforts tubulaires (45, 46).

8. Equipement à voile selon la revendication 1 et la revendication 2, caractérisé en ce que la tige creuse (12) de la tringlerie (5) comporte, du côté opposé au mât (14) de la voile, une plaque profilée en U (22) disposée perpendiculairement, dont les flancs (22) sont destinés à être reliés par une pièce taraudée (24), dans laquelle des vis de blocage (25) vissables contre le cadre (2) de la bicyclette sont retenues.

9. Equipement à voile selon la revendication 1, caractérisé en ce que le tirant (15) qui relie le bout-dehors (9) et le cycliste et qui est fixé par ses extrémités, à ce bout-dehors (9) par un mousqueton (49) et à la ceinture (16) de ce cycliste, peut être fixé de plus à cette ceinture par une pince (52).

10. Equipement à voile selon la revendication 1 et la revendication 9, caractérisé en ce que la pince (52) est disposée sur le devant de la ceinture (16) et près de la boucle et le tirant (15) porte à son extrémité libre, une boule (53).

*Fig.1*

*Fig.2*

Fig.3

Fig.4

Fig.5

Fig.6

*Fig.7*

*Fig.8*

# Fig.9